(19) Europäisches Patentamt
European Patent Office
Office européen des brevets

(11) Veröffentlichungsnummer: **0 165 393**
**B1**

(12) **EUROPÄISCHE PATENTSCHRIFT**

(45) Veröffentlichungstag der Patentschrift: **02.11.88**

(21) Anmeldenummer: **85104337.2**

(22) Anmeldetag: **10.04.85**

(51) Int. Cl.[4]: **A 01 N 47/06** // (A01N47/06, 43:70, 43:56, 37:26, 37:22, 37:20, 37:18)

(54) **Herbizides Mittel.**

(30) Priorität: **22.05.84 DE 3419050**

(43) Veröffentlichungstag der Anmeldung: **27.12.85 Patentblatt 85/52**

(45) Bekanntmachung des Hinweises auf die Patenterteilung: **02.11.88 Patentblatt 88/44**

(84) Benannte Vertragsstaaten: **AT BE CH DE FR IT LI NL**

(56) Entgegenhaltungen:
**EP-A-0 009 616**
**DE-A-2 351 553**

**CHEMICAL ABSTRACTS, Band 101, Nr. 15, 8. Oktober 1984, Seite 226, Nr. 124751u, Columbus, Ohio, US; A. STANOVA et al.: "Problems of corn protection are solved by herbicidal combinations of atrazine",**
**CHEMICAL ABSTRACTS, Band 101, Nr.3, 16. Juli 1984, Seite 222, Nr. 18961c, Columbus, Ohio, US; J. ZEMANEK et al.: "Postemergence herbicide application to control pigweed in maize", & AGROCHEMIA (BRATISLAVA) 1984, 24(4), 115-19**

(73) Patentinhaber: **AGROLINZ AGRARCHEMIKALIEN GESELLSCHAFT M.B.H., St. Peterstrasse 25, A-4021 Linz (AT)**
(84) Benannte Vertragsstaaten: **BE CH FR IT LI NL AT**

(73) Patentinhaber: **Lentia Gesellschaft mit beschränkter Haftung, Arabellastrasse 4 Postfach 81 05 08, D-8000 München 81 (DE)**
(84) Benannte Vertragsstaaten: **DE**

(72) Erfinder: **Diskus, Alfred, Dr., Dornacherstrasse 6, A-4045 Linz (AT)**
Erfinder: **Auer, Engelbert, Haltestellenweg 19a, A-4060 Leonding (AT)**
Erfinder: **Leitner, Harald, Dr., Kirchstetten 19, A-4064 Oftering (AT)**

**EP 0 165 393 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Anmeldung betrifft ein synergistisches, herbizides Mittel, enthaltend als aktiven Bestandteil eine Mischung aus 0-[3-Phenyl-6-chlor-pyridazinyl-(4)]-S-(n-octyl)-thiocarbonat, 2-Chlor-4-äthylamino-6-isopropylamino-1,3,5-triazin und einem Chloracetamid.

Es ist aus AT-P5 326 137 bekannt, daß 3-Phenyl-6-halogen-pyridazinyl-thio- und -dithiocarbonate herbizide Eigenschaften aufweisen und sich unter anderem zur Bekämpfung empfindlicher Gräser im Jugendstadium der Pflanzenentwicklung eignen. In der Praxis hat sich insbesondere die Verbindung 0-[3-Phenyl-6-chlor-pyridazinyl-(4)]-S-(n-octyl)-thiocarbonat (Pyridate) als herbizides Mittel bewährt. Es hat sich allerdings herausgestellt, daß die Bekämpfung von bestimmten Unkrauthirsen, die bereits mehr als 4 Blätter entwickelt haben und sich demnach bereits im Stadium der Bestockung befinden, mit Pyridate allein nicht mehr zufriedenstellend erfolgen kann bzw. daß zur vollständigen Bekämpfung unerwünscht hohe Wirkstoffdosen benötigt werden

Es ist aus "The pesticide Manual", 6th Edition, 1979, Seite 22, bekannt, daß 2-Chlor-4-äthylamino-6-isopropylamino-1,3,5-triazin (Atrazin) als Vor- und Nachauflaufherbizid in vielen Kulturen einschließlich Mais eingesetzt werden kann. Allerdings ist bei der Bekämpfung von Wildhirsen, z. B. von Echinochloa crus galli im Vor- und Nachauflaufverfahren kein befriedigendes Ergebnis zu erreichen (Mitteilungen aus der Biologischen Bundesanstalt für Land- und Forstwirtschaft, Berlin-Dahlen, 1967, Heft 121, Seite 237 und Zusammenfassungen Seiten 238, 239).

Es ist auch bekannt, daß sich 2-Chloracetanilide als Vorauflaufherbizide eignen (Weed Control Handbook: Principles 7th Edition, 1982 by Blackwell Scientific Publications), und aus der "Zeitschrift für Pflanzenkrankheiten und Pflanzenschutz, Sonderheft X, 1984, Verlag Eugen Ulmer Stuttgart, Seiten 361 bis 367, insbesondere Seite 365, 1. und letzter Absatz, sowie Zusammenfassungen 366, 367" ist bekannt, daß das 2-Chloracetanilid 2-Chlor-2',6'-dimethyl-N-(1-pyrazolylmethyl)-acetanilid (Metazachlor) zusammen mit einem Antidot durch den Zusatz von Atrazin eine Wirkungsergänzung erfährt, sodaß neben der Gräserwirkung auch die Wirkung gegen Unkräuter wesentlich erweitert wird. Voraussetzung für eine Wirkung gegen Hirse ist allerdings, daß sie im Vorauflauf, im 1- bis 2Blattstadium oder gerade im Keimstadium behandelt werden kann. Es ist aus der gleichen Literaturstelle, Seiten 369 bis 376, insbesondere Seite 372 sowie Zusammenfassungen Seiten 375, 376, bekannt, daß das 2-Chloracetamid alpha-Chloracet-N-(3,5,5-trimethyl-cyclohexen-1-yl)-N-isopropylamid (Trimexachlor) in Kombination mit Atrazin ebenfalls eine Ergänzung des Wirkungsspektrums erfährt, wobei die sichersten Bekämpfungsergebnisse bei Auflauf des Maises erzielt werden. Solche Herbizidgemische, bei denen sich die Wirkungen additiv ergänzen, bei denen die jeweiligen Wirkungslücken der Einzelkomponenten ausgefüllt werden, sind in der Agrartechnik üblich.

Unerwarteterweise wurde demgegenüber gefunden, daß in einer Kombination von Pyridate, Atrazin und einem Chloracetamid, nicht wie prinzipiell zu erwarten, sich die Wirkungsspektren der Einzelwirkstoffe additiv ergänzen, sondern bei einer solchen Kombination die Nachauflaufwirkung besonders ausgeprägt und vorteilhaft zum Tragen kommt, und daß diese Wirkung zusätzlich synergistisch ist.

Die Möglichkeit der Nachauflaufbehandlung bedeutet für die Praxis der Unkrautbekämpfung, daß die Schadgräser (Wildhirsen) in allen ihren Entwicklungsstadien vom Auflaufen bis zum Beginn der Bestockung durch einmalige Bekämpfung vernichtet werden können, während bei einer Wirkung z. B. nur im Keimstadium nur jeweils gerade keimende Unkräuter vernichtet werden, sodaß etwas später keimende Unkräuter neuerlich bekämpft werden müssen. Mehrmalige Anwendung wäre daher notwendig.

Die synergistische Wirkung bedeutet, daß die Aufwandmengen der Einzelkomponenten bei gleichbleibend guter Wirkung deutlich gesenkt werden, und daß auch dort noch ein hoher Grad an Unkrautbekämpfung erreicht wird, wo die Einzelkomponenten im Bereich allzu geringer Aufwandmengen wirkungslos geworden wären. Dies hat eine wesentliche Verbreiterung des Unkrautspektrums und eine zusätzliche Erhöhung der Sicherheitsgrenze für die Kulturpflanze zur Folge, wie sie für unbeabsichtigte Wirkstoffüberdosierung notwendig und wünschenswert ist.

Gegenstand der vorliegenden Erfindung ist demnach ein herbizides Mittel, das dadurch gekennzeichnet ist, daß es als aktiven Bestandteil die Verbindung 0-[3-Phenyl-6-chlor-pyridazinyl-(4)]-S-(n-octyl)-thiocarbonat in Mischung mit der Verbindung 2-Chlor-4-äthylamino-6-isopropylamino-1,3,5-triazin und einem Chloracetamid der allgemeinen Formel

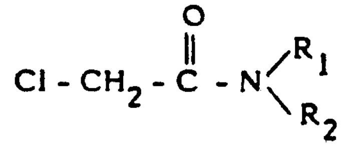

(I) ,

in der $R_1$ einen Alkyl-, Alkoxyalkyl- oder Pyrazol-1-yl-methylrest und $R_2$ einen Phenyl-, 2,6-Dialkylphenyl- oder Trimethylcyclohexenylrest bedeutet, wobei in $R_1$ und $R_2$ der Ausdruck Alkyl- oder Alkoxy 1 bis 3 Kohlenstoffatome umfaßt, enthält.

Das synergistische, herbizide Mittel enthält als aktiven Bestandteil eine Mischung aus Pyridate, Atrazin und einem 2-Chloracetamid, insbesondere einem 2-Chloracetanilid. Als solche kommen etwa die Verbindungen

Trimexachlor, Metazachlor, Alachlor (2,Chlor-N-(2,6-diäthylphenyl)-N-(methoxymethyl)-acetamid), Metolachlor (2-Chlor-N-(2-äthyl-6-methylphenyl)-N-(2-methoxyl-1-methyläthyl)acetamid), Azetochlor (2-Chlor-N-(2-äthyl-6-methylphenyl -N-(äthoxymethyl)acetamid) oder Propachlor (2-Chlor-N-(1-methyläthyl) N-phenylacetamid) in Frage.

Besonders bevorzugt sind synergistische Mittel, die als aktiven Bestandteil eine Mischung aus Pyridate, Atrazin und Alachlor oder Pyridate, Atrazin und Metolachlor enthalten.

Die Zusammensetzung des erfindungsgemäßen Mittels kann in einem gewissen Bereich schwanken. Üblicherweise kommen auf einen Teil Pyridate 0,25 bis 4 Teile Atrazin und 0,15 bis 6 Teile eines Chloracetamides. Bevorzugt kommen auf einen Teil Pyridate 0,5 bis 2 Teile Atrazin und 0,3 bis 2,5 Teile eines Chloracetamides.

Das erfindungsgemäße Mittel mit der neuen Wirkstoffkombination enthält neben den genannten Wirkstoffen noch geeignete Träger- und/oder andere Zuschlagstoffe. Diese können fest oder flüssig sein und entsprechend den in der Formulierungstechnik üblichen Stoffen, wie z. B. natürlichen oder regenerierten mineralischen Stoffen, Lösungs-, Dispergier-, Netz-, Haft-, Verdickungs-, Entschäumungs-, Bindemittel oder Düngemittel. Ebenso können Mittel zugesetzt werden, die den Schmelzpunkt eines oder mehrerer Wirkstoffe(s) herabsetzen.

Geeignete Anwendungsformen sind daher z. B. Spritzpulver, direkt versprühbare oder verdünnbare Lösungen, Suspensionen, Emulsionskonzentrate, Emulsionen, lösliche Pulver, Stäubemittel, Granulate, auch Verkapselungen in z. B. polymeren Stoffen. Die Anwendungsverfahren, wie Versprühen, Vernebeln, Verstäuben, Verstreuen oder Gießen, werden gleich wie die Art der Mittel den angestrebten Zielen und den gegebenen Verhältnissen entsprechend gewählt.

Die Formulierungen, d.h. die das erfindungsgemäße Wirkstoffgemisch und gegebenenfalls einen festen oder flüssigen Zusatzstoff enthaltene Mittel, Zubereitungen oder Zusammensetzungen, werden in bekannter Weise hergestellt, z. B. durch inniges Vermischen und/oder Vermahlen der Wirkstoffe mit Streckmitteln, wie z. B. mit festen Trägerstoffen, Lösungsmitteln und gegebenenfalls oberflächenaktiven Verbindungen (Tensiden).

Als feste Trägerstoffe, z. B. für Spritzpulver, dispergierbare Granulate und Stäubemittel können neben natürlichen Gesteinsmehlen, wie Bentonite, Calcit, Champagnekreide, Talkum, Kaolin, Montmorillonit oder Attapulgit, auch synthetische Stoffe, wie hochdisperse Kieselsäure oder hochdisperse saugfähige Polymerisate, verwendet werden. Als gekörnte, adsorptive Granulatträger kommen poröse Typen, wie z.B. Bimsstein, Ziegelbruch, Sepiolit oder Bentonit, als nicht sorptive Trägermaterialien z. B. Calzit- oder Sand in Frage. Darüberhinaus kann eine Vielzahl von vorgranulierten Materialien anorganischer oder organischer Natur verwendet werden.

Als Lösungsmittel für Suspensionskonzentrate oder Emulsionskonzentrate können in Frage kommen: Aromatische Kohlenwasserstoffe, bevorzugt die Fraktionen $C_8$ bis $C_{12}$, wie z. B. Xylolgemische oder substituierbare Naphthaline, Phthalsäureester, wie Dibutyl- oder Dioctylphthalat, aliphatische Kohlenwasserstoffe, wie Cyclohexan oder Paraffine, pflanzliche Öle, wie Sonnenblumenöl oder Rapssamenöl, Alkohole und Glykole sowie deren Äther und Ester, wie Äthanol, Äthylenglykol, Diäthylenglykol und deren Alkyl- und Dialkyläther, Ketone, wie Cyclohexanon oder Isophoron, stark polare Lösungsmittel, wie N-Methyl-2-pyrrolidon, Dimethylsulfoxyd oder Dimethylformamid sowie gegebenenfalls epoxidierte Pflanzenöle; oder Wasser.

Als Mittel, die schmelzpunkterniedrigend wirken, kommen alle Mittel in Frage, die sich aufgrund kryostatischer Messungen dafür eignen, wie z. B. Campher, Naphthalin, Nitrobenzol, Dimethylsulfoxid, Acetophenon.

Als oberflächenaktive Verbindungen kommen nichtionigene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$ bis $C_{22}$), wie z. B. die Na-oder K-Salze der Öl- oder Stearinsäure, oder von natürlichen Fettsäuregemischen, die z.B. aus Kokosnuß- oder Talgöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonato.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschließt, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Äthylenoxid-Addukten. Die sulfonierten Benzimidazolderivate enthalten vorzugsweise 2-Sulfonsäuregruppen und einen Fettsäurerest mit 8 bis 22 C-Atomen. Alkylarylsulfonate sind z. B. die Na-, Ca- oder Triäthanolaminsalze der Dodecylbenzolsulfonsäure, der Dibutylnaphthalinsulfonsäure oder eines Naphthalinsulfonsäure-Formaldehydkondensationsproduktes.

Ferner kommen auch entsprechende Phosphate, wie z. B. Salze des Phosphorsäureesters eines p-Nonylphenol-(4-14)-Äthylenoxid-Adduktes in Frage.

Als nichtionische Tenside kommen in erster Linie Polyglykolätherderivate von aliphatischen oder

cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Äthylenglykoläthergruppen und 10 bis 100 Propylenglykoläthergruppen enthaltenden Polyäthylenoxidaddukte an Polypropylenglykol, Äthylendiaminpolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Äthylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan, wie das Polyoxyäthylensorbitan-trioleat in Betracht.

Bei den kationischen Tensiden handelt es sich vor allem um quaternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Äthylsulfate vor, z. B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben:
"Mc-Cutcheon's Detergens and Emulsifiers Annual" MG Publishing Corp., Ringwood, New Jersey, 1979,
Sisely and Wood, "Encyclopedia of Surface Active Agents", Chemical Publishing Co., Inc. New York, 1964.

Der Wirkstoffgehalt in handelsfähigen Mitteln liegt zwischen 0,1 und 95 Gewichtsprozent, vorzugsweise zwischen 1 und 80 Gewichtsprozent.

Üblicherweise werden die Wirkstoffe Pyridate und Atrazin in einer Aufwandmenge von 0,5 bis 2 kg/ha, bevorzugt in einer Menge von 0,75 bis 1,5 kg/ha, gegeben und die Wirkstoffe vom Typ Chloracetamid in einer Aufwandmenge von 0,3 bis 3 kg/ha, bevorzugt in einer Menge von 0,5 bis 2 kg/ha. Die Gesamtaufwandsmenge an Aktivsubstanz im synergistischen Mittel beträgt 1,3 bis 5,0 kg/ha, bevorzugterweise 2 bis 3,5 kg/ha.

Das synergistische Mittel wird im Nachauflaufverfahren angewendet. Ihr Hauptanwendungsgebiet sind Maiskulturen. Es ist jedoch auch eine Anwendung in Dauerkulturen, wie Obst- und Weingärten oder in anderen Plantagenkulturen sowie eine Totalunkrautbekämpfung auf landwirtschaftlich nicht genutzten Flächen, wie Industrie oder Gleisanlagen, möglich.

Das herbizide Mittel zeigt einen synergistischen Effekt.

Zur Berechnung eines solchen synergistischen Effektes wird davon ausgegangen, daß ein rein additiver Effekt sich nach folgender Formel errechnet:

$$E = X + Y - \frac{X.Y}{100}$$

(nach L.E.Limpel et al, 1962, Weed control by dimethyl-tetrachloroterephthalate alone and in certain combinations. Proc. NEWCC 16: 48-53, basierend auf D.P.Gowing, 1960, Comments on tests of herbicide mixtures, Weeds 8: 379-391).

E = der (bei additiver) Wirkung zu erwartende herbizide Wirkungsgrad (% Abtötung) nach Anwendung von A + B bei p + q kg Aufwand/ha.
X = Wirkungsgrad (%) bei Anwendung des Wirkstoffes A mit p kg/ha.
Y = Wirkungsgrad (%) bei Anwendung des Wirkstoffes B mit q kg/ha.

Obige Formel wurde von Colby (Calculation Synergistic and Antagonistic Responses of Herbicide Combinations, Weeds, 15, 20) dahingehend erweitert, daß auch 3-Komponenten-Mischungen auf etwaige synergistische Wirkungen hin untersucht werden können.

Der zu erwartende Wirkungsgrad einer Mischung aus drei Komponenten errechnet sich demgemäß nach folgender Formel:

$$E = X + Y + Z - \frac{(X.Y + X.Z + Y.Z)}{100} + \frac{X.Y.Z}{10.000}$$

Liegt der experimentell gefundene Wirkungsgrad der Komponentenmischung über dem gemäß obiger Formeln errechneten Wert für E, so liegt ein Synergismus vor, liegt der Wert darunter, so ist ein Antagonismus gegeben.

**Beispiel 1:**

| | |
|---|---|
| Wirkstoff 1 (Atrazin techn.) | 10,20 % |
| Wirkstoff 2 (Alachlor techn.) | 22,00 % |
| Wirkstoff 3 (Pyridate techn.) | 13,90 % |
| Campher techn. | 3,65 % |
| Na-Dibutylnaphthalinsulfonat | 2,50 % |
| Na-Oleylmethyltaurid | 5,00 % |
| Champagnekreide | 6,25 % |
| hochdisperse Kieselsäure | 36,50 % |

Aus Wirkstoff 2 und 3 sowie Campher techn. wurde unter leichtem Erwärmen eine homogene Lösung hergestellt.

Aus Wirkstoff 1 und den übrigen Beistoffen wurde in einem geeigneten Mischer ein Pulver hergestellt, auf das - bei eingeschaltetem Rührwerk - die oben definierte Lösung aufgesprüht wurde. Nach Beendigung des Sprühvorganges wurde noch ca. 15 Minuten intensiv gemischt und anschließend über eine Stiftmühle gemahlen. Mit dem auf diese Weise hergestellten Spritzpulver kann eine anwendungsfähige Spritzbrühe hergestellt werden.

**Beispiel 2:**

| | |
|---|---|
| Wirkstoff 1 (Atrazin techn.) | 12,75 % |
| Wirkstoff 3 (Pyridate techn.) | 12,50 % |
| Wirkstoff 4 (Metolachlor techn.) | 26,00 % |
| Campher techn. | 3,65 % |
| Na-Dibutylnaphthalinsulfonat | 2,50 % |
| Na-Oleylmethyltaurid | 5,00 % |
| Champagnekreide | 6,25 % |
| hochdisperse Fällungskieselsäure | 31,35 % |

Die Herstellung der Formulierung erfolgte wie in Beispiel 1, nur daß statt der Wirkstoffe 2 und 3 nun die Wirkstoffe 3 und 4 eingesetzt wurden.

**Beispiel 3:**

Mit Mais bestellte Versuchsflächen, welche durch mehrjährige Anwendung von Chlortriazinen einseitig und stark mit Echinochloa crus galli (Hühnerhirse) und Setaria viridis (Borstenhirse) verungrast waren, wurden in Parzellen zu 25 $m^2$ unterteilt. Pro Versuchsprodukt bzw. Produktkombination wurden zwei Parzellen jeweils vorgesehen. Sobald die Schadgräser sich zum Großteil im 3Blattstadium bis im Stadium der Bestockung befanden, wurden die nachfolgend angeführten Wirkstoffe bzw. Wirkstoffkombinationen in Form von in Wasser dispergierbaren Zubereitungen auf die Versuchsparzellen appliziert. Zur Applikation wurde ein mit Preßluft betriebenes Parzellenspritzgerät benützt. Die Produkte wurden dabei mit einer Wassermenge entsprechend 400 l/ha ausgebracht.

Die Versuchsauswertung erfolgte in der Weise, daß vorerst der Besatz an Schadgräsern in den unbehandelten Teilflächen durch Zählung der Bestandesdichte auf je 4 x 0,25 $m^2$ - Teilflächen pro Wiederholung (demnach 8 x 0,25 $m^2$ = $m^2$ pro Versuchsglied) ermittelt wurde. Dieser Wert wurde als Bezugsgröße gleich 100 % gesetzt. Durch gleichartige Ermittlungen des Gräserbesatzes in den jeweiligen, mit den angeführten Produkten bzw. Produktkombinationen behandelten Parzellen wurde die Restverungrasung ermittelt, zum Wert der Kontrollparzellen in Relation gesetzt und somit der herbizide Wirkungsgrad ermittelt. Das Versuchsprogramm wurde an insgesamt 7 Versuchsstellen durchgeführt.

Zur Berechnung etwaiger synergistischer Effekte wurden die Werte einer Analyse nach Limpel und Colby unterzogen.

**Tabelle 1**

Herbizider Wirkungsgrad (% Abtötung) von Echinochloa crus galli

| Nr. | Wirkstoff(e) | g ai/ha | gefunden | berechnet | Differenz |
|---|---|---|---|---|---|
| 1 | Atrazin | 1000 | 65 | - | - |
| 2 | Alachlor | 1680 | 6 | - | - |
| 3 | Pyridate | 900 | 60 | - | - |
| 4 | Metolachlor | 1980 | 15 | - | - |
| | 1 + 2 | 1000+ 1680 | 70 | 67 | + 3 |
| | 1 + 3 | 1000+ 900 | 85 | 86 | - 1 |
| | 2 + 3 | 1680+ 900 | 65 | 62 | + 3 |
| | 1 + 2 + 3 | 1000+ 1680+ 900 | 100 | 87 | +13 |
| | 1 + 4 | 1000+ 1980 | 74 | 70 | + 4 |
| | 3 + 4 | 900+ 1980 | 63 | 66 | - 3 |
| | 1 + 3 + 4 | 1000+ 900 1980 | 99 | 88 | +11 |

**Beispiel 4:**

Wie in Beispiel 1 beschrieben, wurden wiederum Versuchsflächen ausfindig gemacht, auf denen durch langjährige Anwendung von Chlortriazinen vornehmlich Wildhirsen der Gattung Digitaria (D.sanguinalis, Blutfingerhirse) selektioniert worden waren.

Die Art der Versuchsdurchführung gleicht der bei Beispiel 1 beschriebenen, ebenso die Methode der Auswertung.

**Tabelle 2**

Herbizider Wirkungsgrad (% Abtötung) von Digitaria sanguinalis

| Nr. | Wirkstoff(e) | g ai/ha | gefunden | berechnet | Differenz |
|---|---|---|---|---|---|
| 1 | Atrazin | 1000 | 10* | - | - |
| 2 | Alachlor | 1680 | 25 | - | - |
| 3 | Pyridate | 900 | 45 | - | - |
| | 1 + 2 | 1000+ 1680 | 37 | 33 | + 4 |
| | 1 + 3 | 1000+ 900 | 53 | 51 | + 2 |
| | 2 + 3 | 1680+ 900 | 55 | 59 | - 4 |
| | 1 + 2 + 3 | 1000+ 1680+ 900 | 100 | 63 | +37 |

*) Digitaria sanguinalis ist bekanntermaßen gegen Atrazin nicht empfindlich (resistent).

**Patentansprüche**

1. Herbizides Mittel dadurch gekennzeichnet, daß es als aktiven Bestandteil die Verbindung 0-[3-Phenyl-6-chlor-pyridazinyl-(4)]-S-(n-octyl)-thiocarbonat in Mischung mit der Verbindung 2-Chlor-4-äthylamino-6-isopropylamino-1,3,5-triazin und einem Chloracetamid der allgemeinen Formel

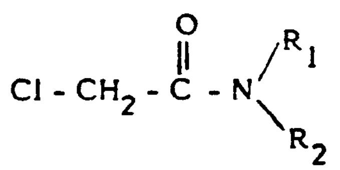

(I) ,

in der $R_1$ einen Alkyl-, Alkoxyalkyl- oder Pyrazol-1-yl-methylrest und $R_2$ einen Phenyl-, 2,6-Dialkylphenyl- oder Trimethylcyclohexenylrest bedeutet, wobei in $R_1$ und $R_2$ der Ausdruck Alkyl- oder Alkoxy 1 bis 3 Kohlenstoffatome umfaßt, enthält.

2. Herbizides Mittel nach Anspruch 1, dadurch gekennzeichnet, daß auf einen Teil 0-[3-Phenyl-6-chlor-pyridazinyl-(4)]-S-(n-octyl)-thiocarbonat 0,25 bis 4 Teile 2-Chlor-4-äthylamin-6-isopropylamin-1,3,5-triazin und 0,15 bis 6 Teile Chloracetamid kommen.

3. Herbizides Mittel nach den Ansprüchen 1 und 2, dadurch gekennzeichnet, daß es als aktiven Bestandteil die Verbindung 0-[3-Phenyl-6-chlor-pyridazinyl-(4)]-S-(n-octyl)-thiocarbonat in Mischung mit der Verbindung 2-Chlor-4-äthylamino-6-isopropylamin-1,3,5-triazin und dem Chloracetamid 2-Chlor-N-(2,6-diäthylphenyl)-N-(methoxymethyl)-acetamid enthält.

4. Herbizides Mittel nach den Ansprüchen 1 und 2, dadurch gekennzeichnet, daß es als aktiven Bestandteil die Verbindung 0-[3-Phenyl-6-chlor-pyridazinyl-(4)]-S-(n-octyl)-thiocarbonat in Mischung mit der Verbindung 2-Chlor-4-äthylamino-6-isopropylamino-1,3,5-triazin und dem Chloracetamid 2-Chlor-N-(2-äthyl-6-methylphenyl)-N-(2-methoxy-1-methyläthyl)-acetamid enthält.

5. Verfahren zur Bekämpfung von Unkräutern und Schadgräsern in landwirtschaftlich genutzten oder nicht genutzten Flächen, dadurch gekennzeichnet, daß man die Flächen nach dem Auflauf der Pflanzen mit einem Mittel gemäß einem der Ansprüche 1 bis 4 behandelt.

6. Verfahren nach Anspruch 5, dadurch gekennzeichnet, daß man Maiskulturen mit dem genannten Mittel behandelt.

7. Verfahren nach Anspruch 6, dadurch gekennzeichnet, daß man Maiskulturen, welche als Schadgräser Wildhirsen der Gattung Digitaria und Echinochloa enthalten, mit dem genannten Mittel behandelt.

8. Verfahren nach den Ansprüchen 5, 6 oder 7, dadurch gekennzeichnet, daß man die Flächen mit dem genannten Mittel in Aufwandmengen behandelt, die 1,3 bis 5,0 kg/ha, vorzugsweise 2 bis 3,5 kg Aktivsubstanz

pro Hektar entsprechen.

9. Verwendung eines Mittels gemäß einem der Ansprüche 1 bis 4 zur Bekämpfung von Unkräutern und Schadgräsern in landwirtschaftlich genutzten oder nicht genutzten Flächen.

## Claims

1. Herbicidal agent, characterised in that it contains, as the active constituent, the compound 0-(3-Phenyl-6-chloro-pyridazin-4-yl)-S-(noctyl)-thiocarbonate mixed with the compound 2-chloro-4-ethylamino-6-isopropylamino-1,3,5-triazine and a chloroacetamide of the general formula

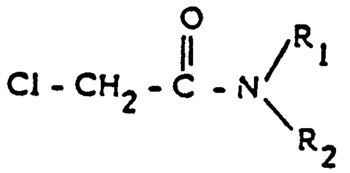

(I)

in which $R_1$ denotes an alkyl, alkoxyalkyl or pyrazol-1-yl-methyl radical and $R_2$ denotes a phenyl, 2,6-dialkylphenyl or trimethylcyclohexenyl radical, the term alkyl or alkoxy in $R_1$ and $R_2$ comprising 1 to 3 carbon atoms.

2. Herbicidal agent according to claim 1, characterised in that it contains 0.25 to 4 parts of 2-chloro-4-ethylamino-6-iospropylamino-1,3,5-triazine and 0.15 to 6 parts of chloroacetamide per part of 0-(3-phenyl-6-chloro-pyridazin-4-yl)-S-(n-octyl)-thiocarbonate.

3. Herbicidal agent according to claims 1 and 2 characterised in that it contains, as the active constituent, the compound 0-(3-phenyl-6-chloro-pyridazin-4-yl)-S-(noctyl)-thiocarbonate mixed with the compound 2-chloro-4-ethylamino-6-isopropylamino-1,3,5-triazine and the chloroacetamide 2-chloro-N-(2,6-diethylphenyl)-N-(methoxymethyl)-acetamide.

4. Herbicidal agent according to claims 1 and 2, characterised in that it contains, as the active constituent, the compound 0-(3-phenyl-6-chloro-pyridazin-4-yl)-S-(n-octyl)thiocarbonate mixed with the compound 2-chloro-4-ethylamino-6-isopropylamino-1,3,5-triazine and the chloroacetamide 2-chloro-N-(2-ethyl-6-methylphenyl)-N-(2-methoxy-1-methylethyl)-acetamide.

5. Method of combating weeds and harmful grasses in areas which are used or not used agriculturally, characterised in that, after emergence of the plants, the areas are treated with an agent according to claims 1 to 4.

6. Method according to claim 5, characterised in that maize crops are treated with the agent mentioned.

7. Method according to claim 6, characterised in that maize grops which contain wild millet of the genus Digitaria and Echinochloa as harmful grasses are treated with the agents mentioned.

8. Method according to claims 5 to 7, characterised in that the areas are treated with the agent mentioned in application amounts which correspond to 1.3 to 5.0 kg/ha, preferably 2 to 3.5 kg of active substance per hectare.

9. Use of an agent according to claims 1 to 4 for combating weeds and harmful grasses in areas which are used or not used agriculturally.

## Revendications

1. Agent herbicide, caractérisé en ce qu'il renferme, comme constituant actif, le composé 0-[3-phényl-6-chloropyridazinyl-(4)]-S-(n-octyl)-thiocarbonate, en mélange avec le composé 2-chloro-4-éthylamino-6-isopropylamino-1,3,5-triazine et un chloracétamide répondant à la formule générale

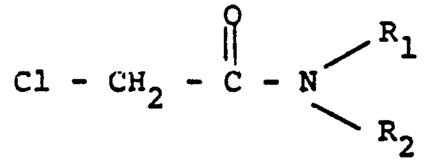

(I)

dans laquelle $R_1$ représente un reste alkyle, alcoxyalkyle ou pyrazol-1-yl-méthyle, et $R_2$ un reste phényle, 2,6-dialkylphényle ou triméthylcyclohexenyle l'expression alkyle ou alcoxy correspondant, dans $R_1$ et $R_2$ à 1 à 3 atomes de carbone.

2. Agent herbicide suivant la revendication 1, caractérisé en ce qu on utilise, pour une partie de 0-[3-phényl-6-chloropyridazinyl-(4)]-S-(n-octyl)-thiocarbonate, 0,25 à 4 parties de 2-chloro-4-éthylamino-6-isoproylamino-1,3,5-triazine et 0,15 à 6 parties de chloracétamide.

3. Agent herbicide suivant les revendications 1 et 2, caractérisé en ce qu'il renferme comme constituant actif le composé 0-[3-phényl-6-chloropyridazinyl-(4)]-S-(n-octyl)-thiocarbonate, en mélange avec le comoosé 2-chloro-4-éthylamino-6-isopropylamino-1,3,5-triazine et le chloracétamide 2-chloro-N-(2,6-diéthylphényl)-N-(méthoxyméthyl)-acétamide.

4. Agent herbicide suivant les revendications 1 et 2, caractérisé en ce qu'il renferme, comme constituant actif, le composé O-[3-phényl-6-chloropyridazinyl-(4)]-S-(n-octyl)-trtiocarbonate, en mélange avec le composé 2-chloro-4-éthylamino-6-isopropylamino-1,3,5-triazine et le chloracétamide 2-chloro-N-(2-éthyl-6-méthylphényl)-N-(2-méthoxy-1-méthyléthyl) -acétamide.

5. Procédé d'élimination des mauvaises herbes et des herbes nocives sur des surfaces à utilisation agricole ou non, caractérisé en ce qu'on traite les surfaces, après la levée des plantes, par un agent suivant les revendications 1 à 4.

6. Procédé suivant la revendication 5, caractérisé en ce qu'on traite des cultures de maïs par l'agent indiqué.

7. Procédé suivant la revendication 6, caractérisé en ce qu'on traite des cultures de maïs qui renferment, comme herbes nocives, des millet sauvages du genre Digitaria et Echinochloa, par l'agent indiqué.

8. Procédé suivant les revendications 5, 6 ou 7, caractérisé en ce qu'on traite les surfaces par l'agent indiqué à des dosages qui correspondent à 1,3 à 5,0 kg/ha, de préférence à 2 à 3,5 kg de substance active par hectare.

9. Utilisation d'un agent suivant l'une des revendications 1 à 4, pour lutter contre les mauvaises herbes et les herbes nocives sur des surfaces à utilisation agricole ou non.